# EUROPEAN PATENT APPLICATION

(11) **EP 1 672 600 A1**
(43) Date of publication of application: **21.06.2006**
(21) Application number: 05007099.4
(22) Date of filing: 31.03.2005
(51) Int. Cl.: G07F 17/32

(54) **Smart card**

(71) Applicant: IFS Informationstechnik GmbH, 81671 München (DE)
(72) Inventor: Frey, Thomas, 85560 Ebersberg (DE); Stulle, Markus, 80797 München (DE)
(74) Representative: Joppich, Martin

(57) **Abstract**

The invention relates to a smart card, a gaming machine with a smart card for conducting a game of chance and a method for operating a smart card. In order to simplify the operation of a conventional gaming machines, a smart card is provided comprising an external interface for an external data exchange, a secured data area for storing a reference-ID and for storing status data administrating a first state, a second state and a third state of the data access to the reference-ID, a processor unit being arranged to control a secured data exchange between the secured data area and the external interface in accordance with the status data, wherein in the first state the access to the secured data area is released for the external interface for initializing data to be stored in the secured data area, wherein in the second state the access to the secured data area is locked for the external interface and wherein in the second state the processor unit is arranged to provide a comparison result of a random number and of the reference-ID and is arranged to set the status data into the third state in accordance with the comparison result, and wherein in the third state the write access to the secured data area is locked and a read only access to the reference-ID is provided for the external interface.

## Description

The invention relates to a smart card, a gaming machine with a smart card for conducting a game of chance and a method for operating a smart card.

An example of a game of chance within the context of the present invention is the so-called n out of m game, wherein a player wins, if the player's set of n numbers matches a predetermined set of n numbers. Each number can be between 1 and m. This type of game of chance is already well established as a lottery game. More recently machines became available, which perform this and similar types of games of chance, which can be located in places such as shopping centres or gambling houses. In such games the predetermined set of n numbers is either known to the player, in which case the player has no influence over the set of numbers submitted, i.e. a random number generator is used. Alternatively, the predetermined set of numbers is not disclosed, in which case the player can freely choose which set of numbers to submit.

Such machines typically provide a simple user interface for either supplying a set of numbers, i.e. through a keypad, or choosing to automatically generate a set of numbers depending on the type of game. The game can be started and to some extend controlled via the user interface. Once the player's set of numbers has been compared to the predetermined set of numbers, a game status, i.e. whether the player has won or not, is determined. Various possibilities to present the result of the game exist. Usually a combination of visual and audio feedback is given. If a player has won, the prize can be claimed directly, provided the prize represents only a small value.

However, if the prize is of substantial value, sophisticated.methods and corresponding hardware are required to protect the gaming machine from fraud. The danger arises not so much from the possibility to physically break into the machine to obtain the prize - when dealing with prizes of substantial value these prizes are not kept in the machine itself. Problematic is much more the risk of tempering with the machine, i.e. with the integrated computer hardware or software, such that the cheater can effectively claim the prize without anybody being able to prove the fraud. For example, if a cheater could obtain the undisclosed predetermined set of numbers without physically damaging the gaming machine, the cheater could input this set of numbers and could claim the prize.

In order to convince a gaming machine vendor to offer prizes of high value in conjunction with such gaming machines, a certification of the gaming machine according to certain security standards is usually required. However, a certification of each new type of gaming machine represents a timely task during the development process and can contribute substantially to the development costs.

Traditionally these problems were solved by employing methods and hardware known from the security industry, i.e. safe locks and corresponding keypads. Being already certified according to certain security standards, only the combination of such methods and/or hardware with the gaming machine specific methods and/or hardware has to be certified.

A disadvantage of these gaming machines of the prior art is, however, the fact that the certification of each new type of gaming machine is still a comparatively complex task. Furthermore, the fact that these systems to ensure the required protection against fraud are mainly hardware-based and distributed over several units makes the system complex and hence more vulnerable for possible security breaches.

It is therefore an object of the invention to simplify the operation of a conventional gaming machine.

This object is solved by the smart card according to claim 1, the gaming machine according to claim 12 and the method for conducting a game of chance according to claim 13.

The smart card according to the invention comprises an external interface for an external data exchange, a secured data area for storing a reference-ID and for storing status data administrating a first state, a second state and a third state of the data access to the reference-ID, a processor unit being arranged to control a secured data exchange between the secured data area and the external interface in accordance with the status data, wherein in the first state the access to the secured data area is released for the external interface for initializing data to be stored in the secured data area, wherein in the second state the access to the secured data area is locked for the external interface and wherein in the second state the processor unit is arranged to provide a comparison result of a random number and of the reference-ID and is arranged to set the status data into the third state in accordance with the comparison result, and wherein in the third state the write access to the secured data area is locked and a read only access to the reference-ID is provided for the external interface.

A gaming machine according to the invention comprises the inventive smart card for conducting a game of chance and comprises a smart card reader for communicating with the smart card, a first user interface for submitting commands to the smart card via the smart card reader, and a second user interface for presenting information obtained from the smart card via the smart card reader.

A method according to the invention for operating a smart card has an external interface for an external data exchange, a secured data area for storing a reference-ID and for storing status data administrating a first state, a second state and a third state of the data access to the reference-ID, and a processor unit being arranged to control a secured data exchange between the secured data area and the external interface in accordance with the status data, and comprises the steps of: initializing the smart card by storing data in the secured data area in the first state, in which write access to the secured data area is provided, supplying a random number to the processor unit being arranged to provide a comparison result of the random number and the reference-ID in the second state, in which the secured data area is locked for the external interface, and setting the status data into the third state in accordance with the comparison result, and verifying the comparison result in the third state, in which the write access to the secured data area is locked and a read-only access to the reference-ID is provided for the external interface.

Smart cards are chip cards into which miniaturized IT components are embedded. The basic features of smart cards including physical properties, electronic signals and transmission protocols are standardized in ISO 7816. Nowadays, smart cards can provide a secure environment to store and protect sensitive data.

The types of smart cards can be divided into two categories. The first category, the so-called memory cards, includes smart cards in which the chip corresponds only to a memory, usually based on semi-conductor or optical means, which can be read and possibly also written to. The second type of smart cards, the so-called microprocessor multifunction smart cards, provide a miniaturized microprocessor and memory components. Microprocessor multifunction smart cards can be used to perform a given task using specific application programs stored on the card in conjunction with a card operating system (COS) providing some basic functions. Common to both types of smart cards is the fact that only a machine-machine interface is present in form of a standardized external interface on the smart card. A suitable card reader is required to communicate with a smart card. The external interface transmits data either using contacts or in a contactless way. When transmitting data using contacts standardized electrical contacts are provided on the smart card and on the card reader. Contactless transmission utilizes various short and long range Radio Frequency Identification (RFID) technologies for transmission. So-called dual interface smart cards can transmit data via a contact or contactless external interface.

Microprocessor multifunction smart cards are preferable in view of security issues, since the access to the data stored on the card can be strictly controlled by the microprocessor, often in conjunction with suitable application programs. The memory components of a microprocessor multifunction smart card are similar with regard to their functionality to such components used in microcomputers, i.e. typically a rewritable memory in form of a RAM (random access memory) for storing temporary data and a non-rewritable memory in form of a ROM (read only memory) for storing permanent data such as the COS are provided. An electronically erasable programmable read only memory (EEPROM) is usually provided for storing data permanently, while still being able to modify this data if required.

The type of smart card chosen, in particular the application programs included in microprocessor multifunction smart cards, depend on the purpose for which the smart card is to be used. Memory smart cards are widely accepted as public telephone cards storing tokens for performing phone calls. Each time a phone call is placed tokens, which represent a certain monetary value, are erased from the smart card. Microprocessor multifunction smart card are employed when dealing with more security-related information, i.e. storing bank account information. In this case the data is often encrypted. Access to the data is limited through the machine-machine interface, which is controlled by the microprocessor. Based on information transferred to the smart card from outside, i.e. a personal identification number (PIN), the microprocessor allows or restricts access to the security-related data. If necessary a decryption is performed when transferring data from the smart card to the card reader.

Microprocessor multifunction smart cards according to the prior art are aimed at providing access to sensitive data once the user has been identified, i.e. through a PIN. Access is then granted to read and/or modify the respective data typically only in one session. The sensitive data represents either the information of interest itself or represents data that allows access to a system, i.e. an electronic key. The user identification has to be performed again, if the smart card is used in a new session.

According to a preferred aspect of the invention, a plurality of reference-IDs and a plurality of status data are stored on the smart card, wherein each reference-ID is related to separate status data for controlling the access to said reference-ID. In this way a number of separate games of chance can be conducted with one smart card. Each reference-ID relates to a separate game of chance and the games of chance can either be conducted sequentially or in parallel. Within the sequential mode a new game, relating to a new reference-ID, can be conducted once the status data relating to the reference-ID of the currently conducted game change into the third state. Within the parallel mode a number of games of chance are active at the same time, i.e. the player can choose one of these games when submitting a command to start a game. In both situations it is possible that one smart card can contain more than one set of status data corresponding to the third state, i.e. more than one prize can be claimed with one smart card.

According to another preferred aspect of the invention the processor unit is controlled by a programme code which is arranged for carrying out a game of chance. Preferably, a plurality of programme codes are provided each programme code being identified by a programme-ID. A programme code represents an application programme for operating the smart card according to the invention. Preferably, the at least one programme code is stored securely on the smart card, i.e. in the secured data area. More than one programme code can be stored on the smart card in order to supply a variety of different games to be conducted. This is for example desirable when operating the smart card with more than one reference-ID. Each game to be conducted is identified by a programme-ID, which is correlated to a specific reference-ID. In this way a number of different types of games or games of the same type, i.e. using the same programme code, can be placed on one smart card. When performing a game of chance using a specific programme-ID, the comparison is performed between the random number and the reference-ID corresponding to that programme-ID.

According to another preferred aspect of the invention, the reference-ID is stored in the secured data area in an encrypted form and a corresponding encoding algorithm controls the secured data exchange. It has to be ensured that the reference-ID cannot be extracted from the smart card while the respective status data correspond to the second state. Nevertheless, in case of unauthorized access the chances of fraud can be reduced by storing the reference-ID in an encrypted form. A variety of encryption techniques have been used in conjunction with smart cards to secure the stored data. Such methods can be applied when storing and retrieving the reference-ID by the processor unit.

According to another preferred aspect of the invention the random number is generated within the smart card by a random number generator. In this way the generated random number can be transmitted directly to the processor unit when required. A random number is necessary within games where the predetermined set of numbers, the reference-ID, is known to the player. The inclusion of the random number generator in the smart card rather than including the random number generator in the gaming machine is preferably in view of security considerations. The random number generator can be implemented as a software programme, i.e. part of the COS, or it can be a separate hardware module.

According to another preferred aspect of the invention the random number is generated outside the smart card and is transmitted to the processor unit via the external interface. Generating the random number outside the smart card can be preferable within games where the predetermined set of numbers, the reference-ID, is not known to the player. In this case a player could choose a random number, i.e. through a keypad in the gaming machine, and submit the random number to the smart card via the external interface.

According to another preferred aspect of the invention the status data comprise an administrator state, wherein in the administrator state the access to the secured data area is released for a full read and/or write access. Preferably, an administrator-ID is stored in a secured administrator data area and wherein the status data are set into an administrator state when a user number corresponding to the administrator-ID is transmitted to the processor unit via the external interface. The administrator state can allow operations beyond the scope of the second state and the third state. For example, it could be possible to enter the administrator state from the third state and return into the second state, or it could be possible to rewrite data within the administrator state. Obviously, the administrator-ID should only be known to trustworthy people. The administrator-ID is supplied via the external interface and a comparison of the supplied administrator-ID with an administrator-ID stored on the smart card determines whether the supplied administrator-ID is correct. The administrator-ID has to be stored securely on the smart card, for example using similar methods as these used for the reference-ID.

According to another preferred aspect of the invention the status data comprise an access counter, wherein the status data are set into the third state in accordance with the contents of the access counter. The access counter is stored securely on the smart card, preferably being part of the status data. When using a smart card with more than one reference-ID it is advantageous to include an access counter for each reference-ID. Preferably, the access counter contains the number of comparison results provided by the processor unit which means that the status data can be set into the third state in accordance with the number of games conducted so far. Each time a game of chance is conducted the access counter is incremented. This allows to restrict the number of games which can be conducted with a smart card. This feature increases the security, since even if a smart card is lost or stolen the validity of the smart card expires once the predetermined number of games has been reached. Since the only access to the card is through the card operating system and more specifically through functions thereof like a command to start a game of chance, it is not possible to temper with the card in such a way as to conduct games without increasing the number of games already conducted. Once a predetermined number of games of chance relating to a reference-ID have been conducted, the card cannot be used for further games relating to this reference-ID, since the status data of the corresponding reference-ID have been set into the third state.

For using the inventive smart card within a gaming machine for carrying out a game of chance the programme code includes the game algorithm which determines the type of game. Examples of possible games of chance to be conducted were already given, however, the smart card according to the invention is not limited to these types of games.

According to the invention the smart card comprises all relevant elements to conduct a game of chance. Merely means for input and output have to be provided by the gaming machine. By means of an example, a reference-ID may comprise a status flag which can correspond either to "GAME WON" or to "GAME NOT WON". This status flag indicates whether the game corresponding to that reference-ID has been won or not. The status flag can be set to "GAME NOT WON" for each reference-ID in the first state during the initialization of the smart card within a secure environment. Such direct changes of the status flag are only possible during the first state and possibly during the administrator state. Furthermore, the status flag is set to "GAME WON" for a reference-ID if the comparison result of a random number and said reference-ID corresponds to a match. A match between a given random number and a given reference-ID corresponds to the two numbers being identical. This type of comparison represents the standard type as used in the games of chance explained above. It is also possible that a match between a given random number and a given reference-ID corresponds to the two numbers having an agreement of a specified number of digits. This type of comparison can be used if already some agreement between the random number and the reference-ID shall lead to a change of the status flag from "GAME NOT WON" into "GAME WON".

In the following the embodiment of the invention is explained in more detail and with reference to the drawings in which
- Fig. 1: shows an embodiment of a gaming machine according to the prior art,
- Fig. 2: shows an embodiment of a gaming machine according to the invention,
- Fig. 3: shows a smart card to be used according to the invention,
- Fig. 4: shows a flow chart representing the method for conducting a game of chance according to the invention, and
- Fig. 5: shows a schematic illustration of the possible states of the status data.

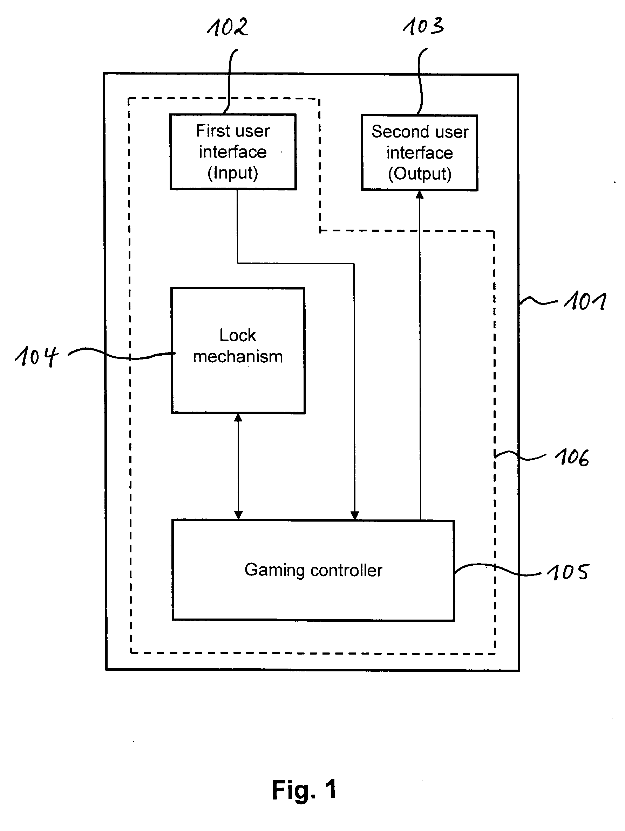

Fig. 1 shows an embodiment of a gaming machine 101 according to the prior art. The gaming machine 101 comprises two user interfaces. The first user interface 102 represents means for performing the payment and submitting commands to start and/or control the game of chance to some extend. The first user interface 102 can include coin acceptors, various buttons or keypads. The second user interface 103 represents means for presenting the outcome of the game of chance, typically in visual and/or audio fashion. The lock mechanism 104, as already explained, forms an integral part of the security system of a gaming machine according to the prior art. It is typically adopted from the security industry and is itself already certified according to certain security standards. The gaming controller 105 is responsible for the overall control of the gaming machine, i.e. to transmit the set of numbers to the lock mechanism. The gaming controller 105 can be realized by hardware and possibly additional software. All elements located within the dashed box 106 represent security-related parts of the gaming machine 101 and hence have to be certified in this particular combination before a gaming machine vendor will offer the use of such gaming machines.

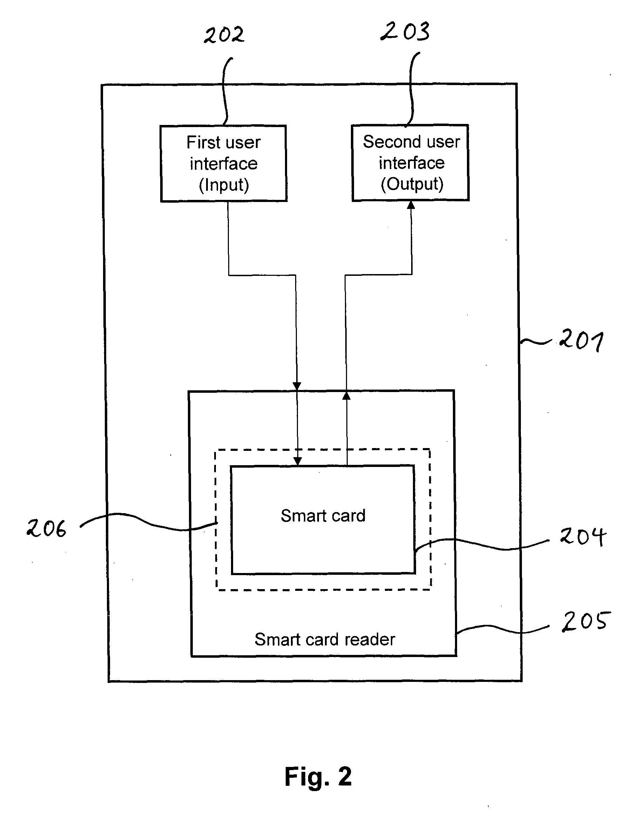

Fig. 2 shows an embodiment of a gaming machine 201 according to the invention. The gaming machine 201 contains two user interfaces. The first user interface 202 represents means for performing the payment and submitting commands to start and/or control the game of chance. According to one preferred embodiment, games of chance can only be conducted once a certain amount has been transmitted to the smart card using tokens. Such tokens, representing a monetary value, can be transferred to the smart card from a further card, i.e. from a micro-payment card, belonging to the player via a separate card reader being part of the first user interface 202. Alternatively, payment can be made using a coin acceptor, in which case tokens can be generated within the gaming machine and can be transferred to the smart card. The second user interface 203 includes a visual and/or audio feedback system for presenting the status of the game, the number of tokens of the player available etc. Additionally, a showcase can be used for presenting symbolically a prize. To further increase the interest of potential players a control line between the gaming machine and the showcase can be added in order to automatically open the showcase in case a player wins.

Both user interfaces communicate with the smart card 204 through the external interface using the card reader 205. This communication can be performed using contacts on the smart card 204 and on the card reader 205 or in a contactless way. Depending on the type of the gaming machine and the strategy of the gaming machine vendor the card reader 205 can either be positioned inside the gaming machine or on the outside of the gaming machine, in which case the player has access to the card reader 205. This would be advantageous, if the players have individual smart cards 204, which can be sold or otherwise distributed.

According to the invention the smart card 204 contains all remaining elements to conduct the game of chance. As indicated by the dashed box 206, only the smart card 204 represents a security-related element. Consequently, only the smart card 204 has to be certified to ensure the gaming machine vendor that no security breaches are present.

Even though it is not required, the gaming machine could comprise additionally a gaming controller for controlling the first and the second user interface. While the smart card is principally sufficient to conduct a game of chance according to the invention, it might be advantageous to add some generic control elements to the gaming machine. The game controller might deal with the input of the tokens or control the visual and/or audio feedback system according to commands from the smart card.

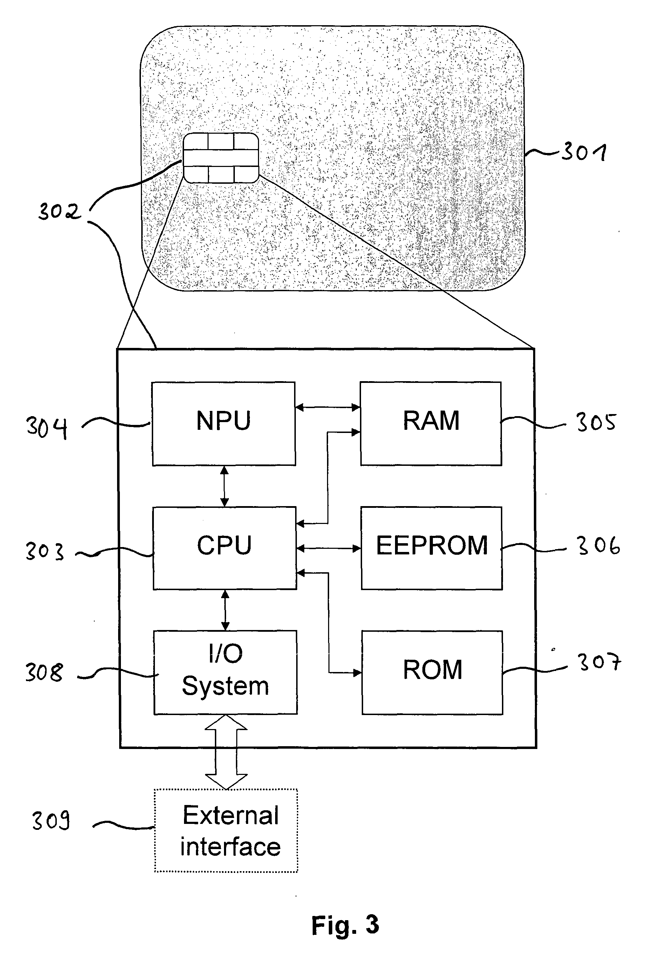

Fig. 3 shows a smart card to be used according to the invention. The smart card 301 shown in Fig. 3 is a microprocessor multifunction smart card, thus the integrated micro chip 302 contains a processor unit. The processor unit is represented by the central processing unit (CPU) 303. A numerical processing unit (NPU) 304 is supplied additionally in this particular smart card. An NPU can be added to a smart card when it becomes necessary to perform intensive numerical calculations such as performing encryption or decryption algorithms. The NPU 304 communicates only with the CPU 303 and with a rewritable memory in form of a random access memory (RAM) 305 for storing temporary data. Further memories are provided in form of an electronically erasable programmable read only memory (EEPROM) 306 and in form of a read only memory (ROM) 307. Typically the COS is stored in the ROM 307 while the data to be processed is stored temporarily in the RAM 305 and permanently in the EEPROM 306. Application programs can either be stored in the ROM 307 or in the EEPROM 306. An I/O system 308 is provided to deal with the input and output of data. It is linked to the external interface 309, which can be based on electrical contacts or can be based on a contactless transmission to the card reader.

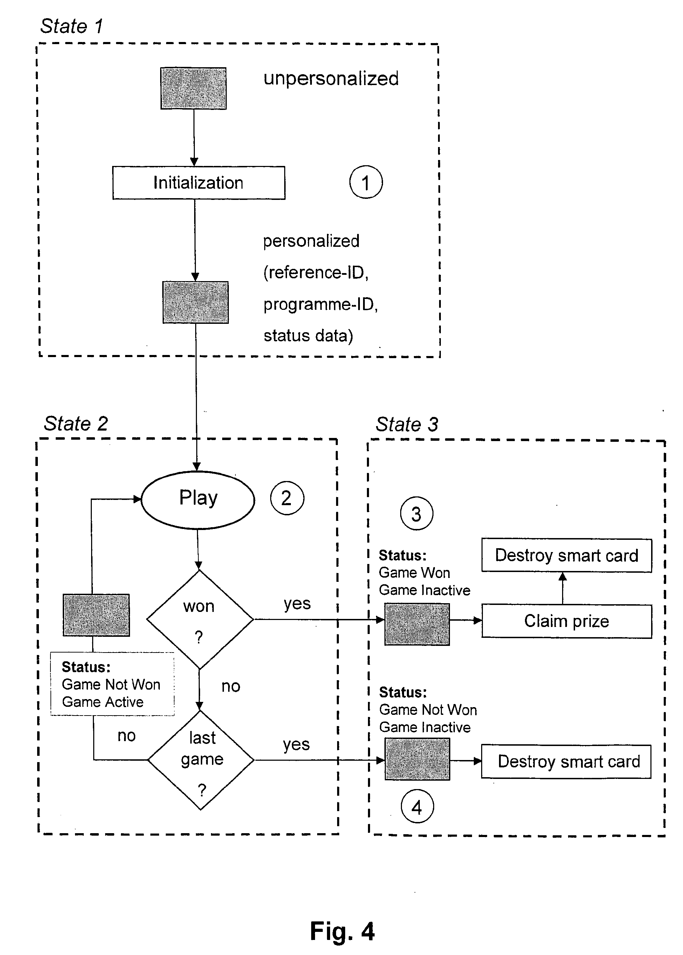

Fig. 4 shows a flow chart representing the method for conducting a game of chance according to the invention. The first step consists of initializing the smart card within a save environment corresponding to the first state. Starting with an unpersonalized smart card only the necessary infrastructure, i.e. the processing unit, the memory and the input/output system, is present. For reasons of efficiency the card operating system can already be stored on the card, preferably within the ROM. During the initialization process additional data is copied onto the smart card. This data includes at least one reference-ID, at least one programme-ID, at least one programme code, the status data and possibly card specific information which allows to uniquely identify each smart card.

The second step consists of using the initialized smart card within a gaming machine according to the invention with a specific reference-ID. The status data of the specific reference-ID correspond to the second state. Once a corresponding command is transmitted to the processor unit of the smart card, the game of chance is started. A random number and the specific reference-ID are compared and based on the comparison result the status data are set.

If the comparison result corresponds to a match between the random number and the specific reference-ID the game relating to that reference-ID has been won and the status data for that reference-ID are set into the third state. In this case a prize can be claimed in step three. In case more than one reference-ID is present further games can be conducted until the status data relating to all reference-IDs correspond to the third state.

According to the invention it is sufficient to be in possession of the smart card to claim a prize. This is a consequence of the decision to combine all security-related elements within the smart card. The agency to which the smart card is handed over, i.e. the gaming machine vendor, can read out the status data to verify whether and if so for which of the at least one reference-IDs a match existed. The smart card can either be re-initialized , i.e. within a save environment, or has to be destroyed.

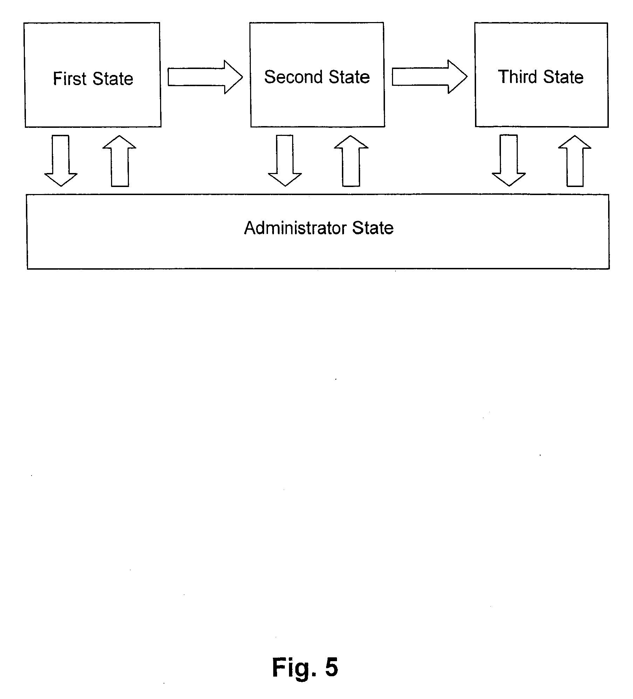

If the status data relating to all reference-IDs correspond to the third state but no match has been achieved, i.e. the maximum number of games for each reference-ID has been reached, as indicated in Fig. 5 by step four, the validity of the smart card will expire. No further games can be conducted with this smart card and the smart card either has to be re-initialized, i.e. within a save environment, or has to be destroyed.

Fig. 5 shows a schematic illustration of the possible states of the status data. The transition between the first state, the second state and the third state has already been explained with reference to Fig. 4. A schematic illustration thereof is shown as well in Fig. 5, indicating clearly that a direct transition between these states is only possible in the direction shown, e.g. it is not possible to switch directly from the third state into the second state. This is a requirement to prevent fraud and hence applies to all players using the smart card. However, the administrator state allows to switch arbitrarily between the states. For example it would be possible to enter the administrator state from the second state and to switch either to the first state or to the third state. Obviously, since this feature shall not be made accessible to players, the administrator state has to be protected. According to the invention it is therefore necessary to provide an administrator-ID in order to enter the administrator state. The administrator-ID can be supplied during various stages within each state.

Besides the functionality to switch between the individual states, the administrator state can also include additional functions not present in the first, second and third state. For example, it could be possible to be able to decrease or to reset the number of comparison results contained in the access counter or to store additional data in the secured data area.

## Claims

1. Smart card, comprising:
an external interface for an external data exchange,
a secured data area for storing a reference-ID and for storing status data administrating a first state, a second state and a third state of the data access to the reference-ID,
a processor unit being arranged to control a secured data exchange between the secured data area and the external interface in accordance with the status data,
wherein in the first state the access to the secured data area is released for the external interface for initializing data to be stored in the secured data area,
wherein in the second state the access to the secured data area is locked for the external interface and
wherein in the second state the processor unit is arranged to provide a comparison result of a random number and of the reference-ID and is arranged to set the status data into the third state in accordance with the comparison result, and
wherein in the third state the write access to the secured data area is locked and a read only access to the reference-ID is provided for the external interface.

2. Smart card according to claim 1, wherein a plurality of reference-IDs and a plurality of status data are stored on the smart card and wherein each reference-ID is related to separate status data for controlling the access to said reference-ID.

3. Smart card according to one of the claims 1 - 2,
wherein the processor unit is controlled by a programme code which is arranged for carrying out a game of chance.

4. Smart card according to claim 3, wherein a plurality of programme codes are provided each programme code being identified by a programme-ID.

5. Smart card according to one of the claims 1 - 4,
wherein the reference-ID is stored in the secured data area in an encrypted form and wherein a corresponding encoding algorithm controls the secured data exchange.

6. Smart card according to one of the claims 1 - 5,
wherein the random number is generated within the smart card by a random number generator.

7. Smart card according to one of the claims 1 - 5,
wherein the random number is generated outside the smart card and is transmitted to the processor unit via the external interface.

8. Smart card according to one of the claims 1 - 7,
wherein the status data comprise an administrator state and wherein in the administrator state the access to the secured data area is released for a full read and/or write access.

9. Smart card according to claim 8, wherein an administrator-ID is stored in a secured administrator data area and wherein the status data are set into an administrator state when a user number corresponding to the administrator-ID is transmitted to the processor unit via the external interface.

10. Smart card according to one of the claims 1 - 9,
wherein the status data comprise an access counter and wherein the status data are set into the third state in accordance with the contents of the access counter.

11. Smart card according to claim 10, wherein the access counter contains the number of comparison results provided by the processor unit.

12. Gaming machine with a smart card according to one of the claims 1 - 11 for conducting a game of chance, comprising:
a smart card reader for communicating with the smart card,
a first user interface for submitting commands to the smart card via the smart card reader, and
a second user interface for presenting information obtained from the smart card via the smart card reader.

13. Method for operating a smart card having
an external interface for an external data exchange,
a secured data area for storing a reference-ID and for storing status data administrating a first state, a second state and a third state of the data access to the reference-ID, and
a processor unit being arranged to control a secured data exchange between the secured data area and the external interface in accordance with the status data,
comprising the steps of:
initializing the smart card by storing data in the secured data area in the first state, in which write access to the secured data area is provided,
supplying a random number to the processor unit being arranged to provide a comparison result of the random number and the reference-ID in the second state, in which the secured data area is locked for the external interface, and setting the status data into the third state in accordance with the comparison result, and
verifying the comparison result in the third state, in which the write access to the secured data area is locked and a read-only access to the reference-ID is provided for the external interface.
